# EUROPEAN PATENT APPLICATION

(11) **EP 2 202 656 A1**
(43) Date of publication of application: **30.06.2010**
(21) Application number: 08172776.0
(22) Date of filing: 23.12.2008
(51) Int. Cl.: G06F 17/30

(54) **Context-based recommender system**

(71) Applicant: Axel Springer Digital TV Guide GmbH, 10117 Berlin (DE)
(72) Inventor: Barbieri, Mauro, 5616 JX Eindhoven (NL); Pronk, Serverius Petrus Paulus, 5262 CN Vught (NL)
(74) Representative: Eisenführ, Speiser & Partner

(57) **Abstract**

The present invention relates to a recommender system and method comprising a first extractor (S200) for applying a first feature extraction algorithm to extract first features characterizing a content of a data input (e.g. webpage) processed by a first application (e.g. Internet browser) running on the system, and a second extractor (S100) for applying a second feature extraction algorithm to extract second features characterizing a content of a database of a second application (e.g. personal TV or movie access) running on the system. Additionally, a comparator (S300) is provided for comparing the first and second features to identify matching items used for the recommendation.

## Description

### FIELD OF THE INVENTION

The present invention relates to a system, method, and computer program product for recommending a product or service to a user.

### BACKGROUND OF THE INVENTION

In the present information society, knowledge is being leveraged from individual stage to community level at a pace never wondered before. Information, the precious raw material of the digital age, has never been so easy to obtain, process and disseminate through the Internet. Yet, with the huge amount of information presented to users, there is a rapidly increasing difficulty of finding out what users want, when they need it, and in a way that better satisfies their requirements. Recommender systems make a recommendation for a specific object or item by using evaluations for that object or item. They were introduced as computer-based intelligent systems to deal with the problem of information and product overload. Two basic entities of a recommender system are the user and the item. A user is a person who utilizes the recommender system providing his opinion about various items and receiving recommendations about new items from the recommender system. Typically goals of recommender systems are to generate suggestions about new items or to predict the utility of a specific item for a particular user. The output of a recommender system can be for example a prediction or a recommendation. A prediction is expressed as a numerical value, representing the anticipated opinion for a specific item. A recommendation can be expressed as a list of items which the active user is expected to like the most. Documents and user profiles may be represented using keyword vectors or lists for comparing and learning.

Nowadays, people spend less and less time watching television (TV) and increasingly more time browsing the Internet. Video content traditionally broadcast and watched on TV is now becoming widely available on the Internet. At the same time, new TV sets and set-top boxes are making Internet content accessible via TV sets. Moreover, Internet-enabled TV sets have been proposed, in which users are enabled to access Internet services and browse the Internet using a remote control and their TV set.

Hard-disk drives and digital video compression technologies have created the possibility of time-shifting live television and recording a large number of TV shows in high quality without having to worry about the availability of tapes or other removable storage media. At the same time, digitalization of audiovisual signals has multiplied the number of content sources for the average user. Hundreds of channels are available using for example a simple parabolic antenna and a digital receiver. More than hundred thousands of video clips are published daily on the Internet across various services, and all major content producers are already making their entire content libraries available online. Thousands of potentially interesting programs are broadcast and made available everyday and can be recorded and stored locally for later access.

However, while content offering for the average user has increased enormously, time for consuming the available content has become the limiting parameter. Hence, filtering-out specific information and selecting individual content based on user needs and preferences have become important issues.

Recommender systems can address these problems for example by estimating a degree of likeliness of a certain item for a certain user and automatically ranking content items. This can be done by comparing characteristics or features of content items with user profiles or user settings. Thus, recommender systems can be seen as tools or mechanisms for filtering out user-specific content to be brought to the attention of the user.

However, in many cases, contents from different media or services are processed separately, so that the use of recommender systems leads to time consuming and load intensive operations. As an example, Internet browsing is typically done using an Internet browser, while TV receivers have their own traditional interface. Programmable video recorders (PVR) can be controlled via an electronic program guide (EPG), displayed on the TV or via a webpage. EPGs are specified for example in standard EN 300 707 v1.2.1 of the European Telecommunications Standards Institute (ETSI). The EPG may be a database stored in a product and accessed by a user via on-screen menus or the like. The value of an EPG to a user is to be informed of the most interesting programs that fit his viewing criteria. Now, the user can see if a program of his choice is available within the next few days and on what channel. Or, the user can select to be informed of the best programs by means of a rating an information provider has associated with the program data. Similar attributes such as the language of the program, its subtitles and audio description or the indication of the unsuitability of the program for viewing by children can be included. Thus, the EPG provides a functionality required by a viewer to select the programs that are to be viewed and provides an easy route to transfer this information to the TV set or video recorder by storing the data as a database in the TV set or video recorder, separating the way information is presented or displayed from the way in which the data is transmitted, allowing the viewer to selectively store information according to his preferences, using a pre-defined refreshing sequence so that the most critical information is always available, and using storage in the end product so that the viewer has instant access to information about available programs and the network operator can reduce the bandwidth required for an optimal performance.

A personal user platform has been suggested for content users (e.g. viewers) as an option to construct their own personal (TV) profile (e.g. personal TV channels alongside the 'real' ones). This may be achieved in several ways. According to a first option, a 'seed' program may be used. While watching a program (e.g. BBC News), a user can create or modify a personal (TV) profile by creating a personal channel in the EPG (called e.g. 'My News'), which will consist of specific content (e.g. BBC News broadcasts) and suggestions about other related news content. The suggestions may be based on an assessment of past viewing choices, including positive and negative votes by the user on content deemed by the system to be relevant. According to a second option, users can create their own desired personal (TV) profile (e.g. personal channel profile) by entering specific characteristics, and the system may again 'learn' how to fine-tune this new personal (TV) profile contents according to the viewer's choices and preferences. According to a third option, the user may simply download a personal (TV) profile (e.g. a personal channel profile) which has been created by someone else. The idea is that it will eventually be possible to provide websites full of such profiles which viewers can recommend to each other.
However, the above mentioned separation of Internet browsing and TV service leads to the problem that when browsing the Internet, reading blogs, online news, accessing friend's pages on social network sites, a user may stumble upon information that relates to TV shows or movies. If the information is of interest, the personal TV profile should be changed accordingly to the newly acquired information, or the personal TV or PVR should be programmed to record shows or movies related to what the user has found on the Internet. This leads to considerable and time consuming operations via the user interface of the TV set. In some cases, such delay may be inadequate and may prevent timely recording of TV shows or movies or other content items detected via the Internet browser.

### SUMMARY OF THE INVENTION

An object of the present invention is to provide a recommender system which enables fast and reliable modification of content items recommended for a user.

This object is achieved by a system as claimed in claim 1, a method as claimed in claim 17 and a computer program product as claimed in claim 18.

According to the invention, a first extractor is provided, that is adapted to apply a first feature extraction algorithm on a content item to thus extract first features characterizing a content of a data input processed by a first application running on a particular apparatus. In addition a second extractor is provided that is adapted to apply a second feature extraction algorithm to a content of a database of a second application running on the particular apparatus or another apparatus of the system to thus extract second features characterizing the content of the database of the second application. A comparator is operatively connected to the first and to the second extractor and is adapted to compare the first and second features to thus identify matching items that are used for the recommendation.

Accordingly, an easy way to automatically or responsively access settings of the second application (such as for example personal television settings or the like) when matching items with processed data of the first application have been detected or identified by the comparator. Any type of input data which can be characterized by a specific content can be compared to the content of the database of the second application, which can comprise any kind of products and/or services for which recommenders can be built. The recommendation and subsequent modification process can thus be provided without substantial delays and interruptions of other applications or procedures.

According to a first aspect, a switching functionality or switching process triggered by the first application so as to activate the second application can be provided. This switching process ensures that the recommendation and subsequent modification process are seamlessly and automatically started to minimize processing delays.

According to a second aspect which can be combined with the first aspect, the first application may comprise an Internet browser and the data input may comprise content information downloaded from the Internet. In a specific implementation, the content information may comprise a Hyper Text Mark-up Language (HTML) document. Such a browser-based application provides the advantage that a recommendation for the second application can be provided during a browsing or surfing activity of the user, wherein specific content items can be highlighted to inform the user about the recommendation option.

According to a third aspect which can be combined with the at least one of the above first and second aspects, the database of the second application may comprise an electronic program guide information, Here, a television access can be recommended to the user during the processing of input data, as soon as television related information has been detected in the first application.

According to a fourth aspect which can be combined with any one of the above first to third aspects, the database of the second application may be a movie database. Similar to the above third aspect, a movie from the movie database which is related to the data input processed by the first application can be recommended, if available.

According to a fifth aspect which can be combined with any one of the above first to fourth aspects, the first extractor may be adapted to detect whether the content of the data input relates to a television program or an existing film or television production. Thus, corresponding items in the data input processed by the first application can be used to trigger the switch or switching process to the second application or can be highlighted and offered to be selected for recommendation while the user then individually activates the switching process.

According to a sixth aspect which can be combined with any one of the above first to fifth aspects, the first and second feature extraction algorithms can be adapted to remove at least one of tags and stop words from the data input. Thereby, the data input can be stripped from information which is not related to or which does not indicate any content of the data input.

According to a seventh aspect which can be combined with any one of the first to sixth aspects, the comparator may be adapted to identify a matching item based on an amount of overlap between the first and second features. This measure provides the advantage that a predetermined amount of overlap required for deciding on a sufficient similarity or match can be predefined.

According to an eighth aspect which can be combined with any one of the first to seventh aspects, the first and second features may comprise vectors of term frequency inverse document frequency values. This approach ensures that relevancy among words, text documents and particular categories of the data input are captured.

According to a ninth aspect which can be combined with any one of the first to eighth asects, the comparator may be adapted to apply at least one of a word stemmer procedure, an approximate string matching procedure, and a procedure for calculating n-grams. Thereby, alternative or additional algorithms for optimizing the comparison between the first and second features can be provided.

According to a tenth aspect which can be combined with any one of the above first to ninth aspects, the first extractor may comprise an automatic keyword identifier for a webpage text, wherein keywords are marked to be used to seed a personal television channel. Hence, a simple way for a consumer to acquire television content based on browsed webpages can be achieved.

According to an eleventh aspect which can be combined with any one of the above first to tenth aspects, the second features may comprise metadata provided in the database. In a specific example, the comparator may be adapted to apply different weights to the metadata. This measure provides the advantage that a list of keywords or the like may be associated to a content item, so that additional processing for generating keywords can be reduced or prevented.

According to a twelfth aspect which can be combined with any one of the above first to eleventh aspects, the second features may comprise a Content Reference Identifier (CRID) of a TV Anytime functionality. Thereby, content referencing can be provided to allow for location independent referencing of content.

According to a thirteenth aspect which can be combined with anyone of the above first to twelfth aspects, a user interface may be provided for displaying the matching items and for providing an input function for selecting the matching items. An option of selecting or recording matching items can therefore be offered to the user.

It is noted that the above recommender system can be implemented based on at least one discrete hardware circuitry with discrete hardware components, at least one integrated chip, an arrangement of chip modules, or at least onea signal processing device or computer device or chip controlled by a software routine or program stored in a memory.

### BRIEF DESCRIPTION OF THE DRAWINGS

The invention will now be described, by way of example, based on embodiments with reference to the accompanying drawings, wherein:
Fig. 1 shows a schematic block diagram of an Internet-enabled TV set according to a first embodiment; and
Fig. 2 shows a schematic flow diagram of processing steps involved in a various embodiments.

### DESCRIPTION OF EMBODIMENTS

Embodiments of the present invention will now be described based on an exemplary Internet-enabled TV set with personal TV based recommender technology.

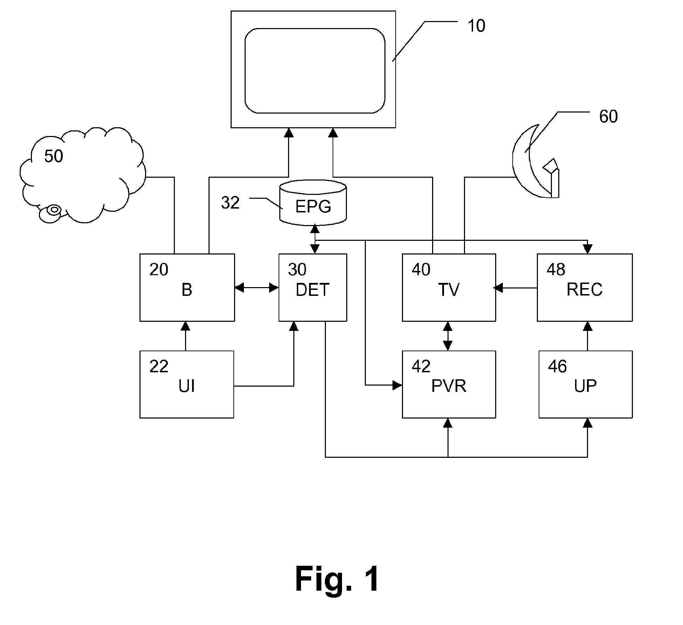

Fig. 1 shows a schematic block diagram of the Internet-enabled TV set according to a first embodiment. The TV set comprises a display unit or module 10 to which an output signal of a browser (B) 20 and a TV receiver (TV) 40 can be applied so as to be displayed on a screen. The TV receiver 40 receives an input signal via an antenna (60) which may be a parabolic satellite antenna. The browser 20 has a connection to the Internet 50 so as to access Internet content (webpages) or download other content information. The browser 20 can be controlled by a user interface (UI) 22 which may comprise a keyboard, pointer device, touchpad or the like. Additionally, the TV receiver 40 is connected to a programmable video recorder (PVR) 42 which can be controlled via an electronic program guide (EPG) stored in a database 32 which can be updated e.g. based on broadcast or Internet information. Additionally a recommender unit 48 is provided which recommends program information from the EPG 32 based on a user profile table 46 which indicates preferences of at least one user of the TV set.

In addition, a determination unit or module 30 is provided which analyzes a data input processed by the browser 20 to extract features (e.g. keywords or the like) characterizing a content of the processed data input. The determination unit 30 has also access to the database 32 in order to analyze the content thereof and to extract features characterizing the content of the available program data. Based on a determined match between the extracted features, the determination unit 30 controls the programmable video recorder 42 and/or the user profile table 46 to offer access to a TV program or production which relates to the data input processed at the browser 20. The updated user profile table 46 influences or controls the recommender unit 48, so that recommended TV programs can be adapted to the browsed Internet content.

In a specific implementation example, the determination unit 30 may be configured to identify data items which relate to TV programs or film productions and highlight or mark these data items on the screen of the display unit 10. Then, the user interface 22 may be used by a user to activate or switch to the matching procedure at the determination unit 30.

In the above embodiment, the determination unit 30 may be implemented for example as a plug-in for the Internet browser 20, which analyses for example HTML elements (e.g. titles, links, paragraphs, table cells, etc.) and automatically detects whether the content in the HTML document relates to an upcoming TV program or an existing film/TV production. In this case the user is offered an easy way to access his personal TV settings by simply selecting an option on a contextual menu or the like by using the user interface 22 (the contextual menu may for example appear when a right mouse click is done on a highlighted HTML element). The user can, for example, be offered to add an upcoming TV program to one of his personal TV channels, or to update his profile by rating (e.g. with "like"/"dislike") the associated content.

According to the first embodiment, when a user is browsing the Internet using the browser 20, he may read an online news article about a certain topic or person. The determination unit 30 automatically or in response to an activation by the running bowser application analyses the text and the content of the EPG in the database 32 and automatically detects that later in the evening on a specific TV channel, a TV program with information about the topic or the person is scheduled for broadcast. Accordingly, the determination unit 30 controls the browser 20 to display an icon indicating that a related TV program has been found in the EPG of the database 32. Additionally , the system could display information (e.g. metadata) about the related TV program.

Now, the user may click or activate the icon and the browser 20 may indicate the retrieved TV program related to the webpage which the user is currently reading. The user can now select an option of adding the retrieved TV program to a personal news channel provided in his user profile table 46.

According to a second embodiment, the database 32 to which the determination unit 30 has access may comprise a movie information. When the user is browsing the Internet, e.g. reading a blog entry about the remake of a specific movie, the determination unit 30 (e.g. browser plug-in) automatically or in response to an activation by the running browser application analyses the text and the content of the movie database and automatically detects that a person associated with the movie appears in the metadata of various TV and movie productions. Additionally, the phrase of the title of the above movie which appears in the blog entry may also appear in the movie database. Accordingly, the determination unit 30 controls the browser 20 to display an icon indicating that a related movie/TV information has been found. The user may now click or activate the icon via the user interface 22 and has the option to update his personal TV profile in the user profile table 46 by rating the identified person (e.g. "like"/"dislike") and the identified movie.

It is noted that the units or modules described in connection with Fig. 1 may be implemented as discrete hardware circuits or functionalities or as software routines controlling a processor or computing device (e.g. central processing unit (CPU), PC, server, or the like).

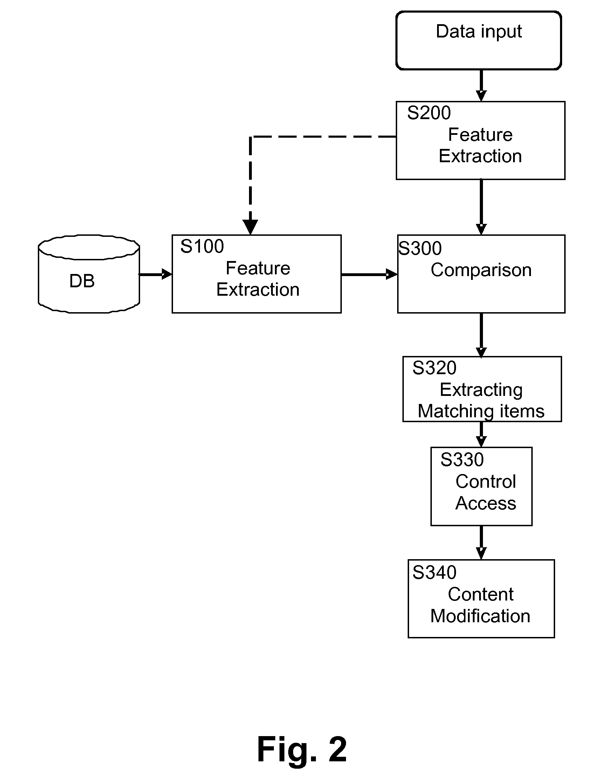

Fig. 2 shows a schematic flow diagram of the context-based recommending procedure according to the above first and second embodiments.

It is noted that the invention is not restricted to recommenders for TV/movie productions or TV programs, but can be implemented for any recommendable products and services. As an example, the above browser application and the TV application (e.g. TV/DVR) may be adapted to run on physically different systems connected via a network (e.g. Internet). In a more specific example, an Internet browser may be used on a mobile phone which communicates with a set-top box application (e.g. DVR).

In general, the system and procedure has a data input, which can be any textual document (e.g. HTML document) that has been processed by a corresponding application running on the processing system (e.g. loaded to and processed in the browser 20), and another input from a database (DB) of available services and/or products (e.g. EPG or movie data). As already mentioned, the recommender system may be controlled by a plug-in for the browser 20 or any other routine or circuit that has direct access to the data loaded and displayed in the browser.

In step S200 of the procedure of Fig. 2, the processed data input (e.g. a HTML document) is analyzed by a feature extraction algorithm to extract (textual) features that characterize its content. Any content analysis and feature extraction algorithms can be used for this purpose. As an example, the data input may first be stripped of its language tags (e.g. HTML text) and then stop words may be removed. Stop words are frequently-used words in a particular language that are not representative of a particular document, such as pronouns, articles, but also frequently-used verbs such as auxiliaries. Further examples of stop words for the English language are "about", "actually", "because", "could", "did", "either", "for", "got", "have", "into", "just", "known", "less", "me", "not", "of", "put", "rather", "she", "that", "until", "very", "was", "you". The remaining words in the documents can then be used as features representing the document. Other classification algorithms, such as described for example in D. Munteanu et al. "Classification Process in a Text Document Recommender System", The Annals of "Dunarea D. Jos" University of Galatz, ISSN 1221-454X, 2005, or other algorithms mentioned in the references cited in this document or elsewhere, could be used as well.

Similarly, in step S100 the content of the database (e.g. EPG or movie data) is processed in a similar way. As indicated by the broken arrow in Fig. 2, the processing of step S100 may optionally be activated by the process of step S200, e.g., when the analysis of step S200 starts or when a predetermined type or content of input data has been detected. Title, genre, description and other metadata are then aggregated to create textual descriptions of the content (e.g. TV programs or movies). The textual descriptions can be processed as if they were individual documents. Each extracted or stripped item can then be represented by a list of keywords.

The features or items extracted in steps S100 and S200 are then compared in a comparison step S300 to find matches. A match can be found for example when there is a sufficiently large overlap between the features extracted in steps S100 and S200. Other types of features and other ways of calculating the match could be used as well and are considered to be within the scope of the present invention. For example, instead of using simple sets of extracted items (e.g. keywords or the like) to represent document and database items, a vector of term frequency inverse document frequency (TFIDF) values could be used as well. Such a TFIDF approach for text classification is for example described in Zhang et al., "An improved TF-IDF approach for text classification" Journal of Zhejiang University SCIENCE, ISSN 1009-3095.

Additionally, the set of extracted items (e.g. keywords) could be enriched by including synonyms and related terms using a thesaurus (or an ontology). Additionally or alternatively, to facilitate the matching process, the terms in the extracted items (e.g. keyword list or feature set) could be reduced to their stems using a word stemmer procedure, such as those described for example in S. Abdou et al., "Evaluation of Stemming, Query Expansion and Manual Indexing Approaches for the Genomic Task, TREC-2005.

Alternatively, instead of performing a strict string matching in the comparing step S300, an approximate string matching or a calculation of so-called "n-grams" based on probabilistic models for natural language processing, as described for example in the US 5,467,425 or in W. Litwin et al., "Pattern Matching Using Cumulative Algebraic Signatures and n-gram Sampling", 2006.

In finding a match between the extracted items or features of steps S100 and S200, depending on the structure of the data retrieved from the database, some metadata could be used as well. For example, in case of an EPG database, a list of keywords associated to an item may be offered by the database, so that generation of additional keywords in step S100 could be dispensed with. Or, alternatively, the keywords, features or items extracted from the content of the database 32 could be added to the keywords derived from the metadata already listed in the database 32. As an additional option, different metadata could have different weights in performing the match. For example, keywords extracted from the title of a program could have a higher weight than keywords extracted from the synopsis.

When a match is found in step S300, matching items are extracted in step S320 and the user can be notified in step S330 to provide a control access. This can be achieved by using graphical means (e.g. showing an icon, highlighting the text or the paragraph in the document for which a match has been found). Alternatively, the system could leave the user undisturbed and show the results of the match only when the user selects a particular option at the user interface 22, so that step S330 can be an optional step.

In the case of a recommendation of TV programs or movies, the control access may provide to the user the options of recording an EPG item, adding it to one of his personal channels, or rating it (e.g. selecting "like" or "dislike"). The determination unit 30 may then access the programmable video recorder 42 or the user profile table 46 accordingly to initiate a content modification (step S340).

In the movie database case of the above second embodiment, a similar procedure as the one shown in Fig. 2 may be used with the difference that, when a match is found in step S300, the option of scheduling a recording on the programmable video recorder 42 can only be given if an additional match with the EPG 32 has been found.

It is noted that the present application is not restricted to HTML documents or Internet content, but can be applied to any type of data input, e.g., digital textual documents. Moreover, the invention can be applied to set-top boxes, TV sets, mobile phones, personal digital assistants (PDAs), personal computers (PCs) and all devices having an Internet browser. Additionally, the invention can be applied to services where recommenders are used to collect, filter, and present content from multiple sources (e.g. Internet TV) to their users. The invention is thus also not restricted to recommenders of TV/film content, but can be applied to music, theatre shows, books and all types of products and services for which recommenders can be built.

As a specific application of the above embodiments the TV-Anytime (TVA) functionality of a TVA system could be used. Here, a Content Reference Identifier (CRID) allows for location independent referencing of content. It can be assigned by an authority which also has the ability to resolve the CRID to a location. The CRID may point to a single piece of content or a series of other CRIDs. It can be implemented as a Uniform Resource Identifier (URI) which points to data or content allocated by an authority which can be identified by a registered Internet domain name. Thereby, a simple mechanism for a distributing content can be provided.

In summary the present invention relates to a recommender system and method comprising a first extractor for applying a first feature extraction algorithm to extract first features characterizing a content of a data input (e.g. webpage, electronic document, or the like) processed by a first application (e.g. Internet browser) running on the system, and a second extractor for applying a second feature extraction algorithm to extract second features characterizing a content of a database of a second application (e.g. personal TV or movie access) running on the system. Additionally, a comparator is provided for comparing the first and second features to identify matching items used for the recommendation.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. A single processor or other unit may fulfill at least the functions of Fig. 2 based on corresponding software routines. The computer program may be stored/distributed on a suitable medium, such as an optical storage medium or a solid-state medium supplied together with or as part of other hardware, but may also be distributed in other forms, such as via the Internet or other wired or wireless telecommunication systems. The mere fact that certain measures are recited in mutually different dependent claims does not indicate that a combination of these measures cannot be used to advantage. Any reference signs in the claims should not be construed as limiting the scope thereof.

## Claims

1. A system for generating a recommendation for at least one content item, the apparatus comprising:
a) a first extractor (S200) for applying a first feature extraction algorithm to extract first features characterizing a content of a data input processed by a first application running on said system;
b) a second extractor (S100) for applying a second feature extraction algorithm to extract second features characterizing a content of a database (32) of a second application running on said system; and
c) a comparator (S300) for comparing said first and second features to identify matching items used for said recommendation.

2. The system according to claim 1, further comprising a switching functionality triggered by the first application so as to activate the second application.

3. The system according to claim 1, wherein said first application comprises an Internet browser (20) and said data input comprises content information downloaded from the Internet.

4. The system according to claim 3, wherein said content information comprises a HTML document.

5. The system according to claim 1, wherein said database (32) of said second application comprises electronic program guide information.

6. The system according to claim 1, wherein said database (32) of said second application is a movie database.

7. The system according to claim 1, wherein said first extractor (S200) is adapted to detect whether said content of said data input relates to a television program or an existing film or television production.

8. The system according to claim 1, wherein said first and second feature extraction algorithms are adapted to remove at least one of tags and stop words from said data input.

9. The system according to claim 1, wherein said comparator (S300) is adapted to identify a matching item based on an amount of overlap between said first and second features.

10. The system according to claim 1, wherein said first and second features comprise vectors of term frequency inverse document frequency values.

11. The system according to claim 1, wherein said comparator is adapted to apply at least one of a word stemmer procedure, an approximate string matching procedure, and a procedure for calculating n-grams.

12. The system according to claim 1, wherein said first extractor (S200) comprises an automatic keyword identifier for a webpage text, and wherein keywords are marked to be used to seed a personal television channel.

13. The system according to claim 1, wherein said second features comprise metadata provided in said database (32).

14. The system according to claim 13, wherein said comparator (S300) is adapted to apply different weights to said metadata.

15. The system according to claim 1, wherein said second features comprise a Content Reference Identifier of a TV Anytime functionality.

16. The system according to claim 1, further comprising a user interface (22) for providing an input function for selecting said matching items.

17. A method of generating a recommendation for at least one content item, the method comprising:
a) applying a first feature extraction algorithm to extract first features characterizing a content of a data input processed by a first data processing application;
b) applying a second feature extraction algorithm to extract second features characterizing a content of a database of a second data processing application; and
c) comparing said first and second features to identify matching items used for said recommendation.

18. A computer program product comprising code means for producing the steps of method claim 17 when run on a computing device.
